# EUROPÄISCHE PATENTSCHRIFT

(11) **EP 0 692 646 B1**
(45) Veröffentlichungstag und Bekanntmachung des Hinweises auf die Patenterteilung: **04.10.2001**
(21) Anmeldenummer: 95105434.5
(22) Anmeldetag: 11.04.1995
(51) Int. Cl.: F16C 29/06

(54) **Linearwälzlager**
Linear roller bearing
Roulement linéaire

(30) Priorität: 14.07.1994 DE 4424840
(43) Veröffentlichungstag der Anmeldung: 17.01.1996
(73) Patentinhaber: INA Wälzlager Schaeffler oHG, 91072 Herzogenaurach (DE)
(72) Erfinder: Eder, Jean-Marie, F-67360 Woerth (FR); Neufang, Helmut, D-66459 Kirkel (DE); Wiemer, Matthias, Dr.-Ing., D-66894 Käshofen (DE); Winkler, Thomas, D-66440 Blieskastel (DE)

(56) Entgegenhaltungen:
- EP-A- 0 558 761
- DE-A- 3 627 169
- US-A- 4 615 569
- US-A- 4 795 272
- US-A- 4 806 022

## Beschreibung

Die Erfindung betrifft ein Linearwälzlager nach dem Oberbegriff des Anspruchs 1.

Bei einem solchen Lager, wie es aus dem Dokument DE-A-3 627 169 bekannt ist, besteht eine Flexibilität der als Oberwandungsteil bezeichneten Montageplatte für ein Anschlußbauteil gegenüber den als Seitenwandungsteile bezeichneten Laufbahnplatten, die mit der Montageplatte einstückig ausgeführt sind, allein aufgrund der Ausführung als gebogene dünne Stahlplatte. Diese umgreift einen Hauptkörper, welcher Rücklaufkanäle für Wälzkörper enthält und aus einem oberen Teilkörper und einem unteren Teilkörper zusammengesetzt ist. Diese Teilkörper können aus Kunststoff bestehen, beispielsweise Spritzgußteile sein.

Aus dem Dokument US-A-4 615 569 ist ebenfalls ein Linearwälzlager der eingangs genannten Art bekannt, bei welchem ein Tragkörper aus einer gebogenen Stahlplatte mit einer Kunststoff-Füllung gebildet ist, welche die Flexibilität der Montageplatte des Tragkörpers bestimmen.

Ein vergleichbares Linearwälzlager ist auch aus dem Dokument EP-A-0 558 761 bekannt. Dort ist es erforderlich, für den Tragkörper eine Laufbahnplatte mit zwei Wälzkörperlaufbahnen und eine davon getrennte und in der Form abweichende Montageplatte herzustellen, bevor diese Platten zusammengefügt und mit dem Kunststoff umspritzt werden. Infolge der Notwendigkeit, zwei verschiedene Platten herstellen zu müssen, ergibt sich ein hoher Fertigungsaufwand für dieses Linearwälzlager.

Der Erfindung liegt die Aufgabe zugrunde, ein Linearwälzlager zu schaffen, das für einfache Führungsaufgaben einsetzbar ist, wobei die Genauigkeit der Anschlußkonstruktion durch eingeschränkte oder sogar fehlende Bearbeitung gering sein kann, um Kosten einzusparen. Das Linearwälzlager soll es ermöglichen, Ungenauigkeiten von Anschlußkonstruktionen auszugleichen. Die Anforderung an die Führungsgenauigkeit dieses Lagers kann dabei untergeordnet sein.

Diese Aufgabe wird beim gattungsgemäßen Linearwälzlager nach dem kennzeichnenden Teil des Anspruchs 1 erfindungsgemäß dadurch gelöst, daß in der Schicht des Tragkörpers zwei gleiche, jeweils zu einer Baueinheit vereinigte, einstückige gebogene Blechelemente eingebettet sind, wobei jedes Blechelement eine Montageplatte und wenigstens eine Laufbahnplatte bildet.

Jedes Blechelement kann spanlos hergestellt werden, so daß die Gesamtkosten erheblich gesenkt werden. Es wird z. B. gestanzt, geprägt und in seine endgültige Form gebogen und anschließend mit dem Schichtwerkstoff umspritzt. Bei dem Spritzvorgang können gleichzeitig die Rücklaufkanäle für die rücklaufenden Wälzkörper der Wälzkörperumläufe ausgebildet werden.

Die beiden gleichen Blechelemente können Einsteckschlitze aufweisen, längs welcher sie gegenseitig zusammengesteckt sind. Es ist möglich, die beiden Blechelemente zusätzlich durch Schweißen, Nieten oder eine andere Befestigungsart aneinanderzufügen. Diese Befestigungsmöglichkeiten können auch angewendet werden, wenn zwei gleiche Blechelemente keine Einsteckschlitze aufweisen, also nicht ineinandergesteckt sind. Das Verschweißen, Vernieten oder andersartige Befestigen bewirkt eine Versteifung der beiden zusammengefügten Blechelemente. Nach dem Herstellen des Tragkörpers werden die Wälzkörpersätze, die Kopfstücke mit den Wälzkörperumlaufkanälen und die stirnseitigen Abstreifer wie bei herkömmlichen Linearwälzlagern angebracht und so der Laufwagen fertiggestellt.

Das erfindungsgemäße Linearwälzlager bietet den Vorteil einer sehr kostengünstigen Herstellung. Es vermag Ungenauigkeiten von Anschlußkonstruktionen auszugleichen. Durch die Blechelementkonstruktion des Laufwagens ist die erforderliche Nachgiebigkeit und ein dynamischer Winkelausgleich gewährleistet. Ein Winkelausgleich ergibt sich hier, wenn die Führungsschiene und die Anschlußkonstruktion nicht exakt parallel sind, so daß sich Fluchtungsfehler ergeben könnten. Der Lauf des Wagens entlang der Führungsschiene wird also auch bei Ungenauigkeiten der Anschlußkonstruktion oder der Führungsschiene nur geringfügig beeinträchtigt. Bei Verwendung von gleichen Blechelementen ergibt sich an den Wälzkörperlaufbahnen infolge der durch die Trennfuge bedingten Teilung in der Mitte des Tragkörpers eine erhebliche Erhöhung der Flexibilität der Laufbahnen. Bei gebogenen Blechelementen kann diese Flexibilitätserhöhung durch zusätzliche Schlitze oder Ausnehmungen erreicht werden.

Ausführungsbeispiele der Erfindung sind in der Zeichnung dargestellt und werden im folgenden näher beschrieben. Es zeigen:
- Figur 1: eine perspektivische Ansicht zweier gleicher zusammengesteckter Blechelemente für einen Tragkörper,
- Figur 2: eine stirnseitige Ansicht des mit den Blechelementen nach Figur 1 hergestellten Tragkörpers;
- Figur 3: eine Abwicklung eines der beiden Blechelemente gemäß Figur 1;
- Figur 4: eine perspektivische Ansicht zweier abgewandelter, gleicher, zusammengesteckter Blechelemente für einen Laufwagen;
- Figur 5: eine stirnseitige Ansicht des Tragkörpers des Laufwagens mit den Blechelementen nach Figur 4;
- Figur 6: eine Seitenansicht der beiden gleichen zusammengesteckten Blechelemente gemäß Figur 4 und
- Figur 7: eine Abwicklung eines der beiden Blechelemente gemäß Figur 4.

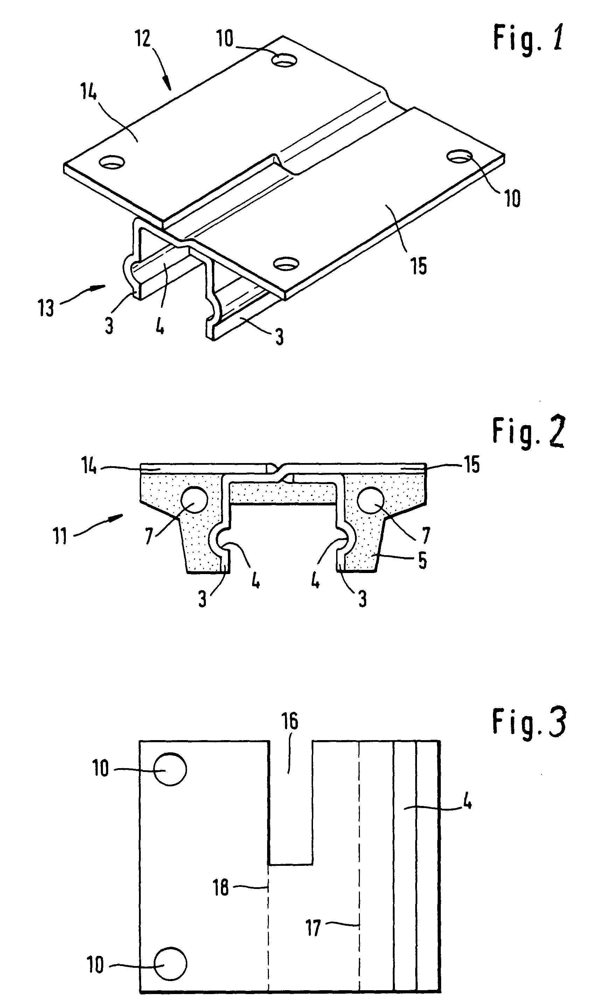

Der Tragkörper 1 gemäß Figur 1 weist zwei völlig gleich ausgebildtete und gegenseitig zusammengesteckte Blechelemente 12 und 13 auf, an denen jeweils Laufbahnplatten 3 mit Laufbahnen 4 ausgebildet sind. Auf diese Weise ergeben sich an dem Tragkörper 11, der nach dem Anbringen der Kunststoffschicht 5 die Rücklaufkanäle 7 aufweist, zwei Montageplatten 14 und 15 mit Befestigungsbohrungen 10. Das Zusammenstecken der beiden Blechelemente 12 und 13 ist möglich, weil diese jeweils einen Einsteckschlitz 16 aufweisen, der sich über die halbe Länge des Blechelements 12 bzw. 13 erstreckt. Die Form der Blechelemente 12 bzw. 13 entsteht durch Umbiegen des Ausgangswerkstücks um seine in Verfahrrichtung des Tragkörpers 11 verlaufenden Biegelinien 17 und 18.

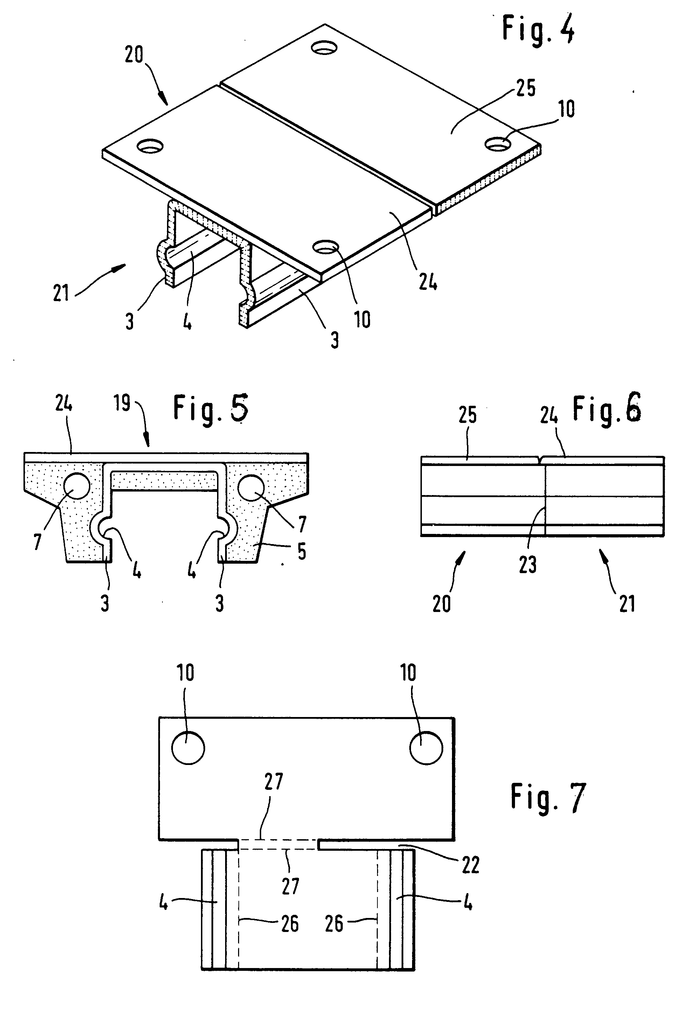

Auch der Tragkörper 19 gemäß Figur 4 enthält zwei völlig gleiche Blechelemente 20 und 21, welche ineinandergesteckt sind. Ihre Einsteckschlitze 22 verlaufen jedoch nicht parallel zu den Laufbahnen 4 der Laufbahnplatten 3, sondern rechtwinkelig dazu, so daß sich geradlinig hintereinanderliegende Laufbahnen 4 der Blechelemente 20 und 21 an dem Tragkörper 19 ergeben, die in der Tragkörpermitte längs einer Trennfuge 23 aneinander angrenzen. An dem Tragkörper 19 befinden sich bei dieser Ausführung die Montageplatten 24 und 25 in Bewegungsrichtung des Laufwagens hintereinander. Infolge des quer verlaufenden Einsteckschlitzes 22 weisen diese Blechelemente 20 und 21 nicht nur Biegelinien 26 auf, die zu den Laufbahnen 4 parallel verlaufen, sondern auch quer verlaufende Biegelinien 27. Diese bilden Verlängerungen der Begrenzungskanten des jeweiligen Einsteckschlitzes 22.

### Bezugszeichen

- 3: Laufbahnplatte
- 4: Laufbahn
- 5: Schicht spritzbarer Masse
- 7: Rücklaufkanal
- 10: Befestigungsbohrung bzw. Gewinde
- 11: Tragkörper
- 12: Blechelement
- 13: Blechelement
- 14: Montageplatte
- 15: Montageplatte
- 16: Einsteckschlitz
- 17: Biegelinie
- 18: Biegelinie
- 19: Tragkörper
- 20: Blechelement
- 21: Blechelement
- 22: Einsteckschlitz
- 23: Trennfuge
- 24: Montageplatte
- 25: Montageplatte
- 26: Biegelinie
- 27: Biegelinie

## Patentansprüche

1. Linearwälzlager mit einem Laufwagen, dessen Tragkörper (11, 19) über umlaufende Wälzkörper an einer Führungsschiene abgestützt und längsverschieblich gelagert ist, wobei die Wälzkörper eines Umlaufs jeweils in am Tragkörper (11, 19) stimseitig angeordneten Kopfstücken umgelenkt werden und der Tragkörper (11, 19) aus einer Schicht (5) aus einer spritzbaren Masse, beispielsweise einer Kunststoffschicht besteht, in welcher metallische Laufbahnplatten (3) für die tragenden Wälzkörper und mindestens eine metallische Montageplatte (14, 15; 24, 25) für die Befestigung des Tragkörpers (11, 19) an dem Anschlußbauteil eingebettet sind und die Schicht (5) Rücklaufkanäle (7) für die rücklaufenden Wälzkörper aufweist, **dadurch gekennzeichnet, daß** in der Schicht (5) des Tragkörpers (11, 19) zwei gleiche, zu einer Baueinheit vereinigte, einstückige, gebogene Blechelemente (13, 21) eingebettet sind, wobei jedes Blechelement (13, 21) eine Montageplatte (14, 15; 24, 25) und wenigstens eine Laufbahnplatte (3) bildet.

2. Linearwälzlager nach Anspruch 1, **dadurch gekennzeichnet, daß** die beiden gleichen Blechelemente (12, 13 bzw. 20, 21) Einsteckschlitze (16, 22) aufweisen, längs welcher sie zusammengesteckt sind.

3. Linearwälzlager nach Anspruch 1 oder 2, **dadurch gekennzeichnet, daß** die beiden gleichen Blechelemente (12, 13 bzw. 20, 21) aneinander befestigt sind.

4. Linearwälzlager nach Anspruch 3, **dadurch gekennzeichnet, daß** die beiden gleichen Blechelemente (12, 13 bzw. 20, 21) durch Schweißen aneinander befestigt sind.

5. Linearwälzlager nach Anspruch 3, **dadurch gekennzeichnet, daß** die beiden gleichen Blechelemente (12, 13 bzw. 20, 21) durch Nieten aneinander befestigt sind.

## Claims

1. A linear roller bearing with a carrier, the supporting body (11, 19) of which is mounted so as to be supported and longitudinally moveable on a guide rail by means of circulating roller bodies , wherein the roller bodies of a circuit are respectively turned around in head pieces disposed on the face side of the supporting body (11, 19) and the supporting body (11, 19) comprises a layer of sprayable material (5), for example a plastic layer, in which metallic track plates (3) for the supporting roller bodies and at least one metallic mounting plate (14, 15; 24, 25) for attachment of the supporting body (11, 19) to the connecting component are embedded and the layer (5) has return channels (7) for the returning roller bodies, **characterised in that** two identical bent sheet metal elements (13, 21), which are made in one piece and are joined to form one unit, are embedded in the layer (5) of the supporting body (11, 19), wherein each sheet metal element (13, 21) forms a mounting plate (14, 15; 24, 25) and at least one track plate (3).

2. A linear roller bearing according to claim 1,
**characterised in that** the two identical sheet metal elements (12, 13 or 20, 21) have insertion slots (16, 22), along which they are joined together.

3. A linear roller bearing according to claim 1 or 2,
**characterised in that** the two identical sheet metal elements (12, 13 or 20, 21) are attached to one another.

4. A linear roller bearing according to claim 3,
**characterised in that** the two identical sheet metal elements (12, 13 or 21, 21) are attached to one another by welding.

5. A linear roller bearing according to claim 3,
**characterised in that** the two identical sheet metal elements (12, 13 or 21, 21) are attached to one another by rivetting.

## Revendications

1. Roulement linéaire comportant un chariot dont le corps de support (11, 19) s'appuie sur un rail de guidage par des organes de roulement mis en circulation et coulissant longitudinalement, dans lequel
les organes de roulement d'une boucle de circulation zone renvoyés chaque fois par des pièces de tête prévues à l'avant du corps de support (11, 19) et ce corps de support (11, 19) est réalisé en une couche (5) d'une masse injectée par exemple d'une masse de matière plastique dans laquelle des plaques de chemin de circulation (3) métalliques pour les organes de roulement de support et au moins une plaque de montage métallique (14, 15 ; 24, 25) pour la fixation du corps de support (11, 12) sont intégrées à la pièce de raccordement, et la couche (5) comporte des canaux de retour (7) pour le retour des organes de roulement,
**caractérisé en ce que**
dans la couche (5) du corps de support (11, 19) on a intégré deux éléments de tôle (13, 21) identiques, pliés, en une seule pièce et assemblés pour former un ensemble,
chaque élément de tôle (13, 21) formant une plaque de montage (14, 15 ; 24, 25) et au moins une plaque de chemin de circulation (3).

2. Roulement linéaire selon la revendication 1,
**caractérisé en ce que**
les deux même éléments de tôle (12, 13 ; 20, 21) comportent des fentes d'engagement (16, 22) par lesquelles elles sont engagées l'une dans l'autre.

3. Roulement linéaire selon les revendications 1 ou 2,
**caractérisé en ce que**
les deux éléments de tôle identiques (12, 13 ; 20, 21) sont fixés l'un dans l'autre.

4. Roulement linéaire selon la revendication 3,
**caractérisé en ce que**
les deux éléments de tôle identiques (12, 13 ; 20, 21) sont fixés l'un à l'autre par soudage.

5. Roulement linéaire selon la revendication 3,
**caractérisé en ce que**
les deux éléments de tôle identiques (12, 13 ; 20, 21) sont fixés l'un à l'autre par des rivets.
